# EUROPÄISCHE PATENTANMELDUNG

(11) **EP 2 043 354 A1**
(43) Veröffentlichungstag der Anmeldung: **01.04.2009**
(21) Anmeldenummer: 08167386.5
(22) Anmeldetag: 10.01.2007
(51) Int. Cl.: H04N 1/60

(54) **Verfahren, Computerprogrammprodukt und Vorrichtung zur Erzeugung und Verarbeitung von Dokumentendaten mit medienbezogenen Farbmanagementressourcen**

(30) Priorität: 20.01.2006 DE 102006002878
(62) Teilanmeldung aus: 07703747.1
(71) Anmelder: Océ Printing Systems GmbH, 85586 Poing (DE)
(72) Erfinder: La Rosa Ducato, José, 85435 Erding (DE)
(74) Vertreter: Schaumburg, Thoenes, Thurn, Landskron, Eckert

(57) **Zusammenfassung**

Ein Verfahren zum Erzeugen und/oder Verarbeiten eines ressourcenbasierten Dokumentendatenstroms, mit dem die Ausgabe mindestens eines Dokuments auf einem Ausgabemedium, insbesondere einem Aufzeichnungsträger steuerbar ist, wobei der Dokumentendatenstrom auf mindestens eine Farbmanagementressource bezogene Ressourcenbezugsdaten und auf das Ausgabemedium bezogene Mediumbezugsdaten enthält, ist so ausgebildet, dass die Ressourcenbezugsdaten und die Mediumbezugsdaten logisch derart miteinander verbunden sind, dass bei einem Wechsel einer Bezugnahme auf ein Ausgabemedium innerhalb des Dokumentendatenstroms automatisch ein Wechsel der Bezugnahme auf eine Farbmanagementresource erfolgt. Die Zuordnung von auf Farbmanagementressourcen bezogenen, seitenbezogenen und/oder medienbezogenen Attributen innerhalb des Dokumentendatenstroms erfolgt hierarchisch nach Dokumentenbereichen. Eine auf eine Farbmanagementressource bezogene Einstellung erfolgt auf den Wert einer übergeordneten Hierarchiestufe, wenn eine Hierachiestufe beendet wird.

## Beschreibung

Die Erfindung betrifft ein Verfahren, ein Gerätesystem und ein Computerprogramm zum Verarbeiten eines ressourcenbasierten Dokumentendatenstroms. Ein typisches Dokumentendatenformat dieser Art ist das Format AFP^{™} (Advanced Function Presentation). Es wird insbesondere in digitalen Produktionsdruck-Umgebungen verwendet, das heißt in Datenverarbeitungs- und Drucksystemen, die Dokumentendaten mit hoher Geschwindigkeit von bis zu einigen tausend Seiten pro Minute verarbeiten, wobei die Dokumente insbesondere jeweils dokumentenindividuelle Daten umfassen.

Die Erfindung betrifft insbesondere die Erzeugung und Verarbeitung ressourcenbasierter Dokumentendatenströme, die farbbezogene Daten für die Dokumente enthalten.

Details des Dokumentendatenstroms AFP^{™} sind in der Publikation Nr. F-544-3884-01, herausgegeben von der Firma International Business Machines Corp. (IBM) mit dem Titel "AFP Programming Guide and Line Data Reference" beschrieben. Der Dokumentendatenstrom AFP wurde weiterentwickelt zu dem Dokumentendatenstrom MO:DCA^{™}, welcher zum Beispiel in der IBM-Publikation SC31-6802-05 (April 2001) mit dem Titel "Mixed Object Document Content Architecture Reference" beschrieben ist. Details dieses Datenstroms sind auch in der US-A-5,768,488 beschrieben. Dort werden auch bestimmte Felddefinitionen des Datenstroms, die Steuerungsdaten enthalten, sogenannte "structures fields" erläutert.

AFP/MO:DCA-Datenströme werden im Zuge von Druckproduktionsaufträgen häufig in Datenströme des Intelligent Printer Data Stream^{™} (IPDS^{™}) umgewandelt. In der US-A-5,982,997 ist ein solcher Prozeß gezeigt. Details zu IPDS Datenströmen sind zum Beispiel im IBM-Dokument Nr. S544-3417-06, "Intelligent Printer Data Stream Reference", 7. Ausgabe (Nov. 2002) beschrieben.

Zur Auswahl verschiedener Aufzeichnungsträger wird in der bisher bekannten AFP/IPDS Architektur die Nummer eines Einzugsfaches angegeben ("Media Source ID" im strukturierten Feld "MMT"), siehe zum Beispiel in der oben genannten Publikation Nr. SC31-6802-05 die Seiten 231-242. Mit dieser Methode wird von einer Druckanwendung ein physikalisches Einzugsfach eines Druckgerätes ausgewählt, aber nicht die Art des zu bedruckenden Mediums angegeben, wie beispielsweise bestimmte vorbedruckte Formulare, transparente Folien, farbiges Papier usw., die für die Anwendung benutzt werden sollen. Derart festgelegte Anwendungen können nur für ein spezifisches, angegebenes Drucksystem verwendet werden und sind abhängig von Setup-Einstellungen des Druckgerätes. Ferner besteht dabei das Problem, daß derart festgelegte Anwendungen nicht die erwarteten Ergebnisse produzieren, wenn sie an ein unterschiedliches Drucksystem geschickt werden.

Im AFP-Datenstrom sind auch sogenannte Map Media Type (MMT) strukturierte Felder vorgesehen, siehe Publikation Nr. SC31-6802-05 auf Seiten 244-246. Mit ihnen ist es möglich, in Druckanwendungen die zu benutzenden Bedruckmedien anzugeben, jeweils durch Name oder Typbezeichnung gekennzeichnet. Eine Steuerungssoftware zur Ansteuerung eines Druckgeräts überprüft dann, welches Einzugsfach in einem Druckgerät den gewünschten Aufzeichnungsträger enthält und wählt das erste übereinstimmende Fach zum Drucken aus.

Verschiedene weitere Druckdatenströme und Drucksysteme, die zur Verarbeitung verschiedenster Druckdatenströme einschließlich AFP und IPDS geeignet sind, sind in der Veröffentlichung "Das Druckerbuch", Dr. Gerd Goldmann (Herausgeber), Océ Printing Systems GmbH, 6. Ausgabe (Mai 2004), ISBN 3-00-001019-x beschrieben. In Kapitel 14 ist das Serversystem Océ PRISMAproduction beschrieben. Dieses flexible Druckdaten-Serversystem ist beispielsweise dazu geeignet, Druckdaten von Datenquellen wie einem Quell-Computer, der Druckdaten in einer bestimmten Druckdatensprache wie AFP (Advanced Function Presentation), MO:DCA, PCL (Printer Command Language), PostScript, SPDS (Siemens Print Data Stream), in der von der Firma Adobe Systems Inc. entwickelten Portable Document Format (PDF) oder in der von der Firma Xerox Corporation entwickelten Sprache Line Coded Document Data Stream (LCDS) zu empfangen, in ein bestimmtes Ausgabeformat umzuwandeln, zum Beispiel in das Intelligent Printer Data Format (IPDS) und die Daten in diesem einheitlichen Ausgabeformat an ein Druckproduktionssystem zu übertragen. In Kapitel 10 sind verschiedene Technologien zum Farbdruck beschrieben, in Kapitel 11 insbesondere die Technologie Océ Direct Imaging, welche einen Farbdruck auf Basis von 7 Grundfarben ermöglicht.

Bei der Spezifikation und Weiterentwicklung von Druckdatenströmen besteht mitunter das Problem, daß im Datenstrom neue Kommandos eingefügt werden müssen, um den technischen Weiterentwicklungen von Computern, Druckgeräten und/oder Nachverarbeitungsgeräten Rechnung zu tragen. Das Festlegen derartiger Erweiterungen ist meist ein relativ aufwendiges Verfahren, bei dem verschiedene Industriepartner zusammenarbeiten müssen, um die Änderungen bzw. Neuerungen untereinander abzustimmen.

In der US-A-6,097,498 ist beschrieben wie drei neue Datenstrom-Kommandos, nämlich WOCC, WOC sowie END dem Intelligent Printer Datastream^{™} (IPDS^{™}) hinzugefügt werden.

Eine weitere Möglichkeit, zusätzliche Steuerungsdaten in einem AFP-Datenstrom zu hinterlegen, besteht darin, Daten in sogenannten object containern abzulegen, siehe zum Beispiel in der Publikation Nr. SC31-6802-05 die Seiten 93-95.

In der von der Anmelderin stammenden WO 03/069548 sind weitere Maßnahmen zum Einfügen neuer Steuerungsinformationen in AFP bzw. IPDS Datenströmen beschrieben.

Aus der US 6,327,624 B1 ist ein Verfahren zum Erzeugen eines Dokumentendatenstroms, der strukturierte Felder enthält, bekannt.

In der IBM-Publikation SC31-6805-05 mit dem Titel "Image Object Architecture Reference", 6. Ausgabe (August 2002) wird beschrieben wie in den Datenströmen AFP und IPDS Dokumentenobjekte wie Text, Bilder, Grafiken, Barcodes und Fonts behandelt werden. Dafür wird eine sogenannte Object Content Architecture (OCA) definiert, in denen für die jeweiligen Objekte bestimmte Datenstrukturen und Steuerungs- bzw. die Objekte kennzeichnenden Parameter festgelegt werden, für Bilder beispielsweise die sogenannte Image Object Content Architecture (IOCA), für Grafiken eine entsprechende GOCA, für Präsentationstexte eine PTOCA usw. Die IOCA wird in dem oben genannten Dokument ausführlich beschrieben. Auf den Seiten v bis vii des Dokuments sind weitere für das Verständnis der Datenströme hilfreiche IBM-Dokumente genannt.

IPDS und AFP Datenströme enthalten und/oder referenzieren in der Regel sogenannte Ressourcen, die Daten enthalten, die zur Ausgabe der Dokumente benötigt werden. Die Daten einer Ressource können dabei für einen oder mehrere Druckaufträge, die wiederum mehrere Dokumente bzw. Dokumententeile enthalten, durch einfache Referenzierung mehrfach verwendet werden, ohne mehrfach übertragen werden zu müssen. Dadurch wird die Menge der von einer Verarbeitungseinheit (zum Beispiel einem die Dokumente erzeugenden Host-Computer) an eine nachfolgende Verarbeitungseinheit (zum Beispiel einen Druckserver oder ein Druckgerät) zu übertragenden Daten verkleinert, insbesondere, wenn Daten von einer Vielzahl von Dokumenten zu übertragen sind, die teilweise gleiche Daten aufweisen bzw. benötigen. Beispiele solcher Ressourcen sind Zeichensätze (Fonts) oder Dokumenten zu überlagernde Formulare (Overlays). Die Ressourcen können dabei im Druckdatenstrom selbst enthalten sein oder getrennt von diesem zwischen den beteiligten Systemen übertragen werden und innerhalb verschiedener Dokumente jeweils nur referenziert sein. Dabei kann insbesondere vorgesehen sein, dass die Ressourcen im weiterverarbeitenden Gerät (zum Beispiel Druckserver oder Druckgerät) bereits gespeichert sind, so dass sie nicht erneut mit jedem Druckauftrag übertragen werden müssen, sondern lediglich referenziert werden müssen.

Bei der Darstellung von AFP-Dokumentendaten werden Ressourcen, die im AFP-Dokumentendatenstrom an verschiedenen Stellen stehen bzw. aus verschiedenen Quellen stammen, mit den entsprechenden variablen Daten zusammengeführt. Die Ressourcendaten können dabei als interne Ressourcen im Dokumentendatenstrom eingebunden sein oder als externe Ressourcen über einen Ressourcennamen aus Bibliotheken aufgerufen werden. In einem Parsing-Vorgang werden weiterhin die Daten auf Konsistenz hin geprüft.

Im Dokument "Print Services Facility for OS/390 & z/OS, Introduction", Vers. 3, Release 3.0 Nr. G544-5625-03 der Firma IBM vom März 2002 sind Details beschrieben, wie ein sogenannter Line Data- bzw. MO:DCA-Dokumentendatenstrom in einen IPDS-Datenstrom umgewandelt wird. Das Softwareprogramm Print Service Facility (PSF) kombiniert dabei variable Dokumentendaten mit Ressourcendaten um Ausgabedaten, die an einen Drucker als Ausgabegerät gesandt werden, zu verwalten und zu steuern. Von der Anmelderin werden Softwareprodukte unter den Handelsnamen Océ SPS und Océ CIS entwickelt und vertrieben, die entsprechende Funktionen aufweisen.

Aus der US 2005/0024668 A1 ist ein Verfahren zum sicheren Verwalten und Zuordnen von Ressourcen bei der Bearbeitung von ressourcenbasierten Druckaufträgen bekannt. Aus der WO-A1-2004/0008379 ist ein Verfahren zur Verarbeitung von Ressourcendaten in einem Dokumentendatenstrom bekannt.

In der WO-A-WO 2004/013748 ist beschrieben wie in AFP/MO:DCA und IPDS-Datenströmen auf Wiedergabemedien bezogene Daten erzeugt und verarbeitet werden können und wie in diesen Datenströmen für verschiedene Dokumenten bzw. Dokumentenseiten Medienwechsel erzeugt werden können, wobei im Datenstrom insbesondere eine hierarchische Gliederung vorgesehen ist.

Bei der Verarbeitung von farbbezogenen Objektdaten wie zum Beispiel Bildern, Grafiken und Texten tritt grundsätzlich die Problematik auf, dass die in einem Ausgabegerät wiedergegebenen Farben nicht ohne weiteres mit den Originalfarben übereinstimmen. Deshalb wurde zur Verarbeitung von Farbdaten die sogenannte Color Management Technologie entwickelt, die sich zum Ziel setzt, eine möglichst originalgetreue Wiedergabe von Farben zu ermöglichen. Dazu werden zum Beispiel Farbprofile von Eingabe- und Ausgabegeräten definiert, die deren Eigenschaften bei der Verarbeitung von Farbdaten angeben. Durch Berücksichtigen der Farbprofile können Farbdaten in einer Verarbeitungskette dann so umgerechnet werden, dass das am Ende der Kette wiedergegebene Farbobjekt relativ genau mit dem Originalobjekt übereinstimmt. Farbdatenverarbeitung auf Basis von Farbprofilen ist jedoch in vielen Fällen relativ aufwendig.

Für Farbinformationen sind insbesondere im Bereich der Dokumentendatenverarbeitung auch sogenannte Highlight Color (HLC) -Farben, -Verfahren und -Einrichtungen entwickelt worden. Derartige Farben umfassen zumindest einen Farbton, der in der Regel abseits vom Farbraum üblicher Farbstoffe liegt. Dieser Farbton kann zum Beispiel ein anwendungsspezifischer Farbton sein (zum Beispiel für ein farbiges Firmenlogo, eine Schmuckfarbe oder eine sogenannte "spot color") und/oder derart angepasst sein, dass er Zugang zu Farbtönen erlaubt, die mit Standard-Druckfarben wie zum Beispiel gelb (Y), magenta (M), cyan (C) und schwarz (K) nicht erreichbar ist. Die Anmelderin vertreibt zum Beispiel derartige Highlight Color Toner für elektrografische Drucker unter dem Handelsnamen Océ Custom Tone^{®}. Dabei ist es insbesondere möglich, Druckstoffe (Toner) kundenspezifisch in Sonder-Farben bereitzustellen, die in dieser Ausprägung einzigartig sind und nur von diesem Kunden verwendet werden, weil sie beispielsweise eine von dem Kunden individuell festgelegte, ihn kennzeichnende Farbe aufweisen. Derartige Farb-Druckstoffe werden zum Beispiel zum Drucken von Firmenlogos in einer spezifischen Firmenfarbe ("company color") verwendet.

Beim Highlight Color-Druck kann auch eine Standardfarbe und eine HLC-Farbe in unterschiedlichen Helligkeitsstufen bzw. Farbsättigungswerten gedruckt werden. In der Regel ist die Standardfarbe schwarz und wird in unterschiedlichen Graustufen gedruckt.

Aus der US 2005/0248787 A1 ist ein Verfahren bekannt, mit dem zur Beschreibung von Farbeigenschaften von Objekten eines Dokuments sogenannte Farbmanagementressourcen (Color Management Ressources, CMR) verwendet werden, die beim Verarbeiten der Dokumentendaten verwendet werden um farbbezogene Festlegungen bei der Ausgabe zu treffen.

In der von der Anmelderin am gleichen Tag hinterlegten Patentanmeldung mit dem Titel "Verfahren, Computerprogrammprodukt und Vorrichtung zur Erzeugung und Verarbeitung von Dokumentendaten mit indizierten Farbmanagementressourcen" sind weitere Konzepte zur Verarbeitung ressourcenbasierter Druckdatenströme enthalten.

Druckprozesse werden zunehmend umfangreicher, da immer mehr Geräte in einen Druckprozess integriert werden, wodurch die Funktionsvielfalt zunimmt. Zudem werden durch das Internet und Intranet Druckprozesse zunehmend regional verteilt ausgeführt oder einem Pool von Druckern zugeordnet, die regional verteilt sein können. Außerdem müssen zunehmend Geräte unterschiedlicher Hersteller in einem Prozess zusammen arbeiten. Um diesen gestiegenen Anforderungen gewachsen zu sein, wurden sogenannte Job Ticket Daten vorgesehen, die als Auftragsbegleitdaten zu einem Dokumentendatenstrom zwischen zwei oder mehreren Software- und/oder Hardwaresystemen ausgetauscht werden, insbesondere in einer vom übrigen Dokumentendatenstrom separierten Datei. In einem Industriekonsortium wurde dazu eine einheitliche Spezifikation zum Austausch von Datenformaten im Druckprozess vereinbart, die als Jobdefinitionformat (JDF) bezeichnet wird. Hierzu gibt es ein korrespondierendes Jobnachrichtenformat (Job Messaging Format bzw. JMF), das entsprechend spezifiziert ist. Die Spezifikation von JDF kann von der Internetseite www.cip4.org heruntergeladen werden, die zum Zeitpunkt der vorliegenden Patentanmeldung aktuelle Spezifikation ist JDF Specification Release 1.3.

Es gibt noch weitere Standardisierungsgremien im Bereich des Dokumentenmanagements und insbesondere Druckens, zum Beispiel die Printer Working Group (PWG), welche insbesondere das Internet Printing Protocol (IPP) entwickelt hat, siehe http://www.pwg.org/ipp/ oder das Konsortium für das Universal Printer, Pre- and Postprocessing (UP³I) Interface, das den Austausch von Steuerungsdaten zwischen Druckgeräten und dazugehöriger Vor- und Nachverarbeitungsgeräte betrifft, siehe http://www.up3i.org/. Zum IPP wurde insbesondere das Dokument "Standard for Media Standardized Names" (26.02.2002) gebildet, in dem Mediennamen nach Medienattributen standardisiert sind. Dieses und weitere Dokumente sind insbesondere von den jeweiligen Internetauftritten der Standardisierungsgremien erhältlich.

Die oben genannten Publikationen bzw. Dokumente werden hiermit durch Bezugnahme in die vorliegende Beschreibung aufgenommen und die dort beschriebenen Verfahren, Systeme und Maßnahmen können in Verbindung mit der vorliegenden Erfindung Anwendung finden.

Es ist Aufgabe der Erfindung, die Verarbeitung von Farbinformationen in einem ressourcenbasierten Dokumentendatenstrom zu verbessern.

Diese Aufgabe wird durch die in den unabhängigen Ansprüchen angegebene Erfindung gelöst. Vorteilhafte Ausführungsformen der Erfindung sind Gegenstand der Unteransprüche.

Gemäß einem ersten Aspekt der Erfindung werden beim Erzeugen eines ressourcenbasierten Dokumentendatenstroms, mit dem die Ausgabe mindestens eines Dokuments auf einem Ausgabemedium, insbesondere auf einem Aufzeichnungsträger steuerbar ist, wobei der Dokumentendatenstrom auf mindestens eine Farbmanagementressource bezogene Ressourcenbezugsdaten und auf das Ausgabemedium bezogene Mediumbezugsdaten enthält, die Ressourcenbezugsdaten und die Mediumbezugsdaten logisch miteinander verbunden. Durch diese Verbindung bzw. Zuordnung kann bei einem Wechsel einer Bezugnahme auf ein Ausgabemedium innerhalb des Dokumentendatenstroms insbesondere bei einem späteren automatisierten Verarbeiten des Dokumentendatenstroms automatisch ein Wechsel der Bezugnahme auf eine Farbmanagementressource erfolgen.

Dieser Aspekt der Erfindung beruht auf der Erkenntnis, dass bei der Wiedergabe eines Dokuments auf verschiedenen Aufzeichnungsträgern der Farbeindruck farbiger Komponenten je nach Aufzeichnungsträger unterschiedlich ist. Er beruht weiterhin auf der Erkenntnis, dass bei der Wiedergabe der farbigen Komponenten auf einem Ausgabemedium, das ein Aufzeichnungsträger ist, dessen Eigenschaften hinsichtlich Farbe, Gewicht und/oder Oberfläche den Eindruck bzw. die Werte der letztlich wiedergegebenen Farben beeinflußt. Dementsprechend wird in einem bevorzugten Ausführungsbeispiel der Erfindung zur Verarbeitung farbbezogener Daten von Dokumentendatenströmen, die auf einem bestimmten Ausgabemedium vorgesehen sind, eine dem Ausgabemedium insbesondere individuell zugeordnete Farbmanagementressource vorgesehen, die an die entsprechenden Eigenschaften des Ausgabemediums angepaßte Daten enthält.

Weiterhin wurde erfindungsgemäß erkannt, dass auf Basis des Ressourcenmodells für Dokumentendatenströme die Zuordnung eines Ausgabemediums zu Dokumentenbereichen, insbesondere einer oder mehrere Dokumentenseiten, die auf dem selben Ausgabemedium ausgegeben werden sollen, der Umfang des Dokumentendatenstroms dadurch minimiert werden kann, dass innerhalb des Dokumentendatenstroms an entsprechenden, dokumentenbezogenen Stellen nur mit Bezugsdaten das entsprechende Medium ausgewählt wird und die entsprechenden ausführlichen Steuerdaten bezüglich des Mediums, hier insbesondere Farbmanagementressourcen, durch indexartige Ressourcenbezugsdaten mit dem Medium in Verbindung gebracht bzw. bei der späteren Verarbeitung bzw. Wiedergabe der Daten zur Steuerung der Ausgabe verwendet werden können. Dies wird insbesondere dadurch erreicht, dass auf eine Farbmanagementressource bezogenen Ressourcenbezugsdaten und die Mediumbezugsdaten innerhalb des Dokumentendatenstroms logisch miteinander verbunden bzw. insbesondere bezüglich eines Datenstroms zusammengehöriger Dokumentendaten einander fest zugeordnet werden.

Die Erfindung ermöglicht die Zuweisung einer Farbmanagementressource zu einem Aufzeichnungsträger gemeinsam mit anderen Zuweisungen zu dem Aufzeichnungsträger einmalig vorzunehmen und im Dokumentendatenstrom an mehreren Dokumentenstellen durch einfaches Referenzieren bzw. Zuordnen des Aufzeichnungsträgers alle ihm zugeordneten Zuweisungen einschließlich der zugeordneten Farbmanagementressource zu übernehmen. Entsprechende Systeme zum Erzeugen und Verarbeiten der Dokumentendatenströme sind deshalb recht benutzerfreundlich. Weiterhin können dadurch Fehler bei der Erzeugung und Verarbeitung entsprechender Dokumentendatenströme vermieden werden, weil beim Ausdrucken von Datenströmen, deren Dokumente zumindest bereichsweise auf verschiedenen Aufzeichnungsträgern ausgegeben werden sollen und die Farbdaten enthalten, die Verwendung von Farbtransformationstabellen bzw. Farbmanagmentressourcen bei der Verarbeitung der Bilddaten automatisch mit der zugewiesenen Farbmanagementressource und damit zuverlässig erfolgt. Fehler aufgrund falscher oder fehlender Zuordnung geeigneter Farbmanagementressourcen in einzelnen oder mehreren Dokumentenseiten, die insbesondere bei mehrfachem Wechseln der Aufzeichnungsträger-Zuordnung innerhalb eines Dokumentendatenstroms entstehen können, sind dadurch hiermit weitgehend vermeidbar.

Innerhalb des Dokumentendatenstroms, der Daten zu mehreren Dokumenten umfasst, innerhalb von Dokumentenseiten und/oder innerhalb von Dokumentenseitenbereichen, die aufeinanderfolgende Seiten umfassen können, kann die Zuordnung von Ressourcenbezugsdaten und Aufzeichnungsträgerbezugsdaten beibehalten oder auch verändert werden.

Die Zuordnung einer Farbmanagementressource zu einem Aufzeichnungsträger kann insbesondere durch Referenzierung der Farbmanagementressource innerhalb eines dem Aufzeichnungsträger zugeordneten Datenelements erfolgen, beispielsweise in einer MO:DCA Medium Map in einem Medium Modification Control Feld. Die Zuordnung einer Farbmanagementressource zu einer Dokumentenseite oder einer Gruppe von Dokumentenseiten kann dann einfach durch Zuordnung des Aufzeichnungsträgers zu der Dokumentenseite bzw. der Gruppe von Dokumentenseiten erfolgen, wobei die CMR-Zuordnung automatisch über die Referenzierungen in dem Aufzeichnungsträger zugeordneten Datenelement gegeben ist.

Bei der Verarbeitung und insbesondere Ausgabe des Dokumentendatenstroms in einem Ausgabegerät kann eine im Datenstrom bereits bestehende, logische Verbindung bzw. Referenzierung dementsprechend zur Ansteuerung von Farbausgabeelementen verwendet werden.

Die Zuordnung von auf Farbmanagementressourcen bezogenen, seitenbezogenen und/oder medienbezogenen Attributen innerhalb des Dokumentendatenstroms kann insbesondere hierarchisch nach Dokumentenbereichen erfolgen. Eine auf eine Farbmanagementressource bezogene Einstellung kann dabei insbesondere auf den Wert einer übergeordneten Hierarchiestufe erfolgen, wenn eine Hierarchiestufe beendet wird. Als Hierarchiestufen des Dokumentendatenstroms können insbesondere die Stufen "Gesamtdatenstrom", "Druckdatei", "Dokument", "Seitengruppe" und/oder "Datenobjekt" vorgesehen sein.

Aufeinanderfolgende Dokumentenseiten werden insbesondere solange mit den selben, zugeordneten Medien verarbeitet, bis neue Medien zugewiesen werden. Wenn einem Bereich des Dokumentendatenstroms ein Medium zugeordnet wird, aber kein Farbattribut zugeordnet wird, dann können bei der Verarbeitung des Dokumentendatenstroms, insbesondere im Zuge der Ausgabe der Dokumentendaten auf einem Aufzeichnungsträger diesen Bereich, die für einen übergeordneten Bereich gültigen Farbattribute zugeordnet werden. Gemäß diesem bevorzugten Ausführungsbeispiel der Erfindung kann insbesondere ein Wechsel verschiedener Aufzeichnungsträger bei der Ausgabe von Dokumenten auf verschiedene, in einem Druckgerät verfügbare, zum Beispiel blattförmige Aufzeichnungsträger mit nur wenigen Steuerungsdaten und damit hoher Geschwindigkeit ausgegeben werden. Werden zum Beispiel eine Vielzahl von Seiten auf weißen Standard-Papierblättern ausgegeben, für die die Standard-Farbmanagementressourcen des Druckgeräts verwendet werden und nur wenigen bestimmten Seiten des Dokuments ein anderes Medium zugeordnet wird, beispielsweise Papierblätter mit höherem Gewicht und/oder anderer Farbe, die als Trennblätter dienen, so können die den Trennblattbereichen zugeordneten Mediendaten ohne gesonderte Referenzierung einer Farbmanagementressource verarbeitet werden, in dem die übergeordneten, für die übrigen Seiten und insbesondere dem gesamten Druckjob zugeordneten Farbmanagementressourcen verwendet werden.

Als weitere Hierarchiestufen des Dokumentendatenstroms können die Stufen "Gesamtdatenstrom" entsprechend zum Beispiel einer Druckdatei bzw. einem Druckauftrag (engl. print job), "Dokument", "Seitengruppe" und/oder "Datenobjekt" vorgesehen werden.

Die Daten einer Farbmanagementressource können gemäß einem weiteren, bevorzugten Ausführungsbeispiel der Erfindung codiert gespeicherte Werte entsprechenden Medieneigenschaften umfassen, insbesondere zur Medienhelligkeit, zur Medienfarbe, zur Medienoberfläche (englisch media finish) und/oder zum Mediengewicht des zugeordneten Aufzeichnungsträgermediums.

Bei der Ausgabe der Dokumente in einem Ausgabegerät, wie zum Beispiel einem Druckgerät kann dann insbesondere geprüft werden, ob ein in ihm verfügbares, den Mediumbezugsdaten entsprechendes Ausgabemedium den in der Farbmanagementressource abgespeicherten Medieneigenschaften entspricht und im Falle fehlender Übereinstimmung, insbesondere hierarchiestufenweise geprüft werden, ob eine den Medieneigenschaften des Ausgabemediums besser entsprechende Farbmanagementressource verfügbar ist und diese gegebenenfalls zur Verarbeitung der zugeordneten Dokumentendaten verwendet werden. Alternativ oder zusätzlich kann über ein Gerätebedienfeld, zum Beispiel eine grafische Benutzerschnittstelle (engl. grafical user interface, GUI) ein entsprechender Hinweis und/oder ein entsprechendes Auswahlmenü zur Festlegung der Vorgehensweise ausgegeben werden.

Hinsichtlich der Medieneigenschaften kann zur Festlegung geeigneter Farbmanagementressourcen im Druckgerät weiterhin insbesondere Medienhelligkeit, Mediengewicht, Medienoberfläche und/oder Medienfarbe eine Überprüfung erfolgen und je nach Übereinstimmung zwischen im Dokumentendatenstrom ausgewählter und im Druckgerät verfügbaren Medien eine geeignete Entscheidung getroffen werden.

In einem bevorzugten Ausführungsbeispiel der Erfindung werden Dateien von Farbmanagementressourcen mit Namen versehen, aus denen mindestens ein Attribut der ihnen zugeordneten Medien hervorgeht. Dabei kann insbesondere vorgesehen werden, einen standardisierten Namen eines Mediums einzubinden bzw. zu verwenden, beispielsweise einen im oben genannten IPP-Dokument "Standard for Media Standardized Names" standardisierten Namen. Dadurch kann die Verwaltung entsprechender Farbmanagementressourcen für Bediener an entsprechenden Computersystemen vereinfacht werden, in dem die Farbmanagementressourcennamen in entsprechender Klarschrift dargestellt werden.

Bei der Verarbeitung von Dokumentenseiten, die zur doppelseitigen Ausgabe auf einem Aufzeichnungsträger vorgesehen sind, kann gemäß einem vorteilhaften Ausführungsbeispiel der Erfindung eine Kennung zur Unterscheidung der Vorderseite und der Rückseite vorgesehen sein, durch die der Vorseite eine andere Farbmanagementressource zugeordnet wird, als der Rückseite. Dadurch ist es insbesondere möglich, eine farbtreue Wiedergabe auf Aufzeichnungsträgern zu ermöglichen, deren Medienattribute insbesondere hinsichtlich der Farbe und der Medienoberfläche auf der Vorderseite und der Rückseite unterschiedlich sind.

Die Erfindung ist insbesondere zur Anwendung auf Dokumentendatenströme vorgesehen, die gemäß der Spezifikation AFP, MO:DCA und/oder IPDS strukturiert und insbesondere codiert ist. Dabei ist insbesondere vorgesehen, die Zuordnung der Farbmanagementressource zu einem Ausgabemedium mit einem einer sogenannten Media Map zugeordneten Strukturelement, insbesondere mit einem Media Map Objekt vorzusehen. Weiterhin kann die Zuordnung insbesondere mittels eines strukturierten Feldes (engl. structured field), weiterhin insbesondere in einem MO:DCA-Datenstrom über ein sogenanntes Medium Modification Control (MMC) Feld erfolgen. Das strukturierte Feld kann insbesondere Daten umfassen, die einem Namen der Farbmanagementressource zugeordnet sind, der im strukturierten Feld verwendeten Codierung, einer Identifikationsnummer und/oder einer Beschreibung zu der Farbmanagementressource. Das Media Map Objekt kann insbesondere in einer Formdef-Datei des MO:DCA Datenstroms als Copygroup enthalten sein. Ein Aufruf der Media Map kann über den Befehl "Invoke Media Map" erfolgen.

Die Zuordnung der Farbmanagementressource mit dem Media Map Objekt kann über eine Map Data Ressource erfolgen und weiterhin insbesondere durch eine Identifizierungskennung der Farbmanagementressource erfolgen. Der Dokumentendatenstrom kann zusätzlich zu den Farbmanagementressourcen weitere, dem jeweiligen Dokumentendatenstrom entsprechende, spezifikationskonforme Ressourcenzuordnungen umfassen, beispielsweise für AFP, MO:DCA oder IPDS-Datenströme fonts, overlays usw..

Gemäß einem weiteren vorteilhaften Ausführungsbeispiel der Erfindung können in einem Dokumentendatenstrom für ein Ausgabemedium weitere Informationen über gewünschte farbspezifische Weiterverarbeitungsparameter hinterlegt werden, insbesondere zur Festlegung von Farbtransformationseigenschaften für Fälle, in denen in den Dokumentendaten Farben referenziert werden, die in einem Ausgabegerät mit den darin befindlichen Mitteln (insbesondere Druckstoffen oder Druckverfahren) nicht wiedergebbar sind. Diese Festlegungen können insbesondere entsprechend einem an sich bekannten rendering intent Zuordnungskonzept erfolgen und die Varianten "kalorimetrisch" (engl. calorimetric) und "medienabsolut" (engl. media absolute) umfassen, wobei zum Beispiel "kalorimetrisch" auf eine kalorimetrisch farbneutrale Wiedergabe der Dokumente mit den verwendeten Ausgabe-Druckstoffen abstellt und "medienabsolut" eine medienspezifische, im Prinzip frei wählbare Wiedergabecharakteristik. Zusätzlich können weitere Varianten wie zum Beispiel "saturation" und "fotometric" vorgesehen werden.

Gemäß einem zweiten Aspekt der Erfindung, der in Verbindung oder auch unabhängig von den oben genannten Aspekten der Erfindung ausgeführt werden kann, wird zum Erzeugen und/oder Verarbeiten eines Dokumentendatenstroms, der auf Farbmanagementressourcen bezogene Daten umfaßt, mit denen die Verarbeitung farbbezogener Daten des Dokumentendatenstroms steuerbar ist, dem Dokumentendatenstrom mindestens eine indizierte Farbmanagementressource zugeordnet ist, mit der farbbezogene Daten des Dokumentendatenstroms mindestens einer vorgegebenen Farbpalette zuordenbar sind.

Der zweite Aspekt der Erfindung beruht auf der Erkenntnis, dass die Handhabung von farbbezogenen Daten wesentlich vereinfacht werden kann, wenn die Basis, auf der die Farbdaten bezogen werden bzw. der damit verbundene verfügbare Farbraum, eingeschränkt ist.

Dieser zweite Aspekt der Erfindung beruht weiterhin auf der Erkenntnis, dass beim Erzeugen und/oder Verarbeiten von Dokumentendaten die grafischen Wiedergaben der in den Dokumenten enthaltenen farbigen Objekte bereits durch die dabei verwendeten Ausgabegeräte aufgrund der gerätespezifischen Farbcharakteristiken, wie zum Beispiel der in einem Druckgerät verfügbaren Druckfarbstoffe, eingeschränkt ist.

Weiterhin wurde erkannt, dass die genannten Einschränkungen für die Übertragung von Dokumentendaten, die Farbinformationen auf Basis von Farbmanagementressourcen definieren, durch Bezug auf vorgegebene Farbpaletten sowohl eine sehr genaue, geräteübergreifende Farbzuordnung möglich ist, als auch eine performante Verarbeitung der Farbdaten, weil sowohl die Farbcodierung mit nur wenigen Datenmengen als auch die Farbdatenverarbeitung mit geringem Aufwand zu bewerkstelligen ist. Mit der Erfindung kann insbesondere der Vorteil erreicht werden, dass aufwendige Farbdatentransformationen nicht benötigt werden, weil die vorgegebenen Farbpaletten systemübergreifend vom System, das die Dokumentendaten erzeugt, bis hin zum Ausgabesystem, das die Dokumentendaten ausgibt (zum Beispiel in einem Druckgerät), bekannt ist und insbesondere bereits vorab abgeglichen ist.

Durch den Bezug der Dokumentendaten auf eine indizierte Farbmanagementressource ist es dabei möglich, Farbinformationen durch einen kurzen, zum Beispiel nur wenigen Byte umfassenden Indexcode zu adressieren. Auf Basis der indizierten Farbmanagementressource, die genauere Angaben über die diesem Code zugehörigen Farbdaten enthält, ist insbesondere bei der Übertragung des Dokumentendatenstroms eine Reduzierung des Datenstromvolumens möglich, weil Spezialfarbtöne, wie zum Beispiel Highlight Colors, direkt mit einem Indexwert adressierbar sind. Die indizierte Farbmanagementressource kann insbesondere Daten enthalten, die Aufschluss über einen dem Indexcode zugeordneten Farbraum, wie zum Beispiel rot-grün-blau (RGB), cyan-magenta-gelbschwarz (CMYK), Grautöne oder Mischung individueller Farbtöne (sogenannter Colorants) enthält. Die indizierte Farbmanagementressource kann die individuellen Farbtöne bzw. - stoffe insbesondere durch einen Klartext-Namen identifizieren.

Die indizierte Farbmanagementressource und/oder ihr zugeordnete Daten des Dokumentendatenstroms können vorzugsweise prozessfarbpalettenweise eine codierte Information enthalten, die angibt, welche insbesondere in einem Ausgabesystem verfügbaren und/oder in einem Farbsystem wie RGB oder YMCK definierten Farbtöne zur Wiedergabe der Prozessfarben der jeweiligen Prozessfarbpalette benötigt werden. Die codierte Information kann insbesondere die in einem Dokumentendatenerzeugungs- und/oder verarbeitungsprozess und/oder im Ausgabegerät verfügbaren Prozessfarben umfassen.

Die codierte Information kann einem Klartext-Namen eines Farbtons und/oder einer Farbtonnummer eines vorgegebenen Farbdefinitionssystems zugeordnet sein. Weiterhin kann sie angeben, zu welcher zweiten Farbpalette Daten des Dokumentendatenstroms neu zugeordnet werden, wenn sie auf einem Ausgabegerät mit der ursprünglichen Zuordnung zu einer ersten Farbpalette nicht wiedergebbar sind.
Beim Verarbeiten des Dokumentendatenstroms kann vorzugsweise geprüft werden, ob eine im Datenstrom mittels eines Indexcodes referenzierte, in der Farbmanagementressource definierte Farbe und/oder Farbpalette im Ausgabegerät verfügbar ist, bevor die Ausgabe erfolgt.

Die mit den Indexcodes definierten Farben können einer oder mehreren Farbtönen und/oder Farbstoffen entsprechen oder auch einer Kombination von einer oder mehrere dieser Farbtöne. Zur Verarbeitung von Dokumentendaten hat es sich insbesondere als ausreichend erwiesen, eine beschränkte Anzahl von Farben, zum Beispiel 64.000 Farben, als Farbpalette zu definieren. Die Festlegung der Farben im Einzelnen kann dabei insbesondere individuell nach Anwendung erfolgen. Sie gilt aber insbesondere prozessübergreifend von der Erzeugung eines Dokuments bis zu dessen Ausgabe auf einem Ausgabegerät. Die Festlegung für eine Farbpalette kann aber auch anwendungsübergreifend gelten, wobei sogar denkbar ist, dass bestimmte Farbpaletten mit ihren zugehörigen Farbtönen in einem Farbdefinitionssystem standardisiert bzw. festgelegt werden.

Eine Farbpalette kann insbesondere mit relativ kurzen Codes für 64.000 Farben zum Beispiel mit zwei-Byte-Codes codiert werden. Dabei ist es möglich, die verfügbaren Farben in verschiedene Paletten zu unterteilen, wobei zum Beispiel 264 Paletten mit einem ersten Byte codiert werden und 264 Farben pro Palette mit einem zweiten Byte.

Daten, die auf Farbmanagementresourcen bezogen sind, können vorzugsweise als Auftragsbegleitdaten in einer insbesondere vom übrigen Dokumentendatenstrom getrennten Datei vorgesehen werden. Die Auftragsbegleitdaten, deren Datei und/oder weitere Auftragsbegleitdaten sind vorzugsweise gemäß der Spezifikation des Job Definition Formats aufgebaut.

Gemäß einem dritten Aspekt der Erfindung, der ebenfalls unabhängig und/oder in Kombination mit den zuvor genannten Aspekten der Erfindung gesehen werden kann, wird zum Übertragen einer Farbinformation eines Objekts in einem ressourcenstrukturierten Dokumentendatenstrom die Farbinformation über einen Indexwert übertragen, der einem Eintrag in einer indizierten Farbmanagementressource entspricht.

Der Indexwert ist dabei ein relativ einfacher, kurzer Zahlencode, der einer beschränkten Anzahl verfügbarer Farben entspricht und nur wenige, zum Beispiel ein bis vier Byte umfaßt. Innerhalb der Farbmanagementressource ist der Zahlencode insbesondere einem Farbmodell und/oder einer Farbe zugeordnet. Die Farbmanagementressource kann insbesondere unabhängig vom Dokumentendatenstrom erzeugt und/oder zwischen einem die Dokumentendaten sendenden und die Dokumentendaten empfangenden System ausgetauscht werden. Erzeugung, Austausch und Speicherung der Farbmanagementressourcen kann dabei insbesondere gemäß den beiden Druckdatenströmen AFP und IPDS für Ressourcen üblichen Methoden erfolgen. Auch die in der US 2005/0248787 A1 in Zusammenhang mit Color-Management-Ressources angegebenen Verfahren, Maßnahmen und Systemstrukturen sind im Zusammenhang mit der vorliegenden Erfindung vorteilhaft nutzbar. Dieses Dokument wird dazu an dieser Stelle der vorliegenden Beschreibung nochmals durch Bezugnahme eingefügt.

Gemäß den beiden zuletzt genannten Aspekten der Erfindung kann prozessübergreifend bereits beim Erzeugen von Dokumenten eine codierte Referenzinformation erzeugt werden, die angibt, welche Grundfarbtöne bzw. Grundfarbtonkomponenten bei der Ausgabe der Daten verwendet werden sollen. Die Grundfarbtöne können bereits im Vorfeld entsprechend den in einem Ausgabegerät verfügbaren Grundfarben ausgewählt bzw. festgelegt werden. Sie und/oder das durch sie gebildete Farbsystem sind im übrigen frei wählbar, das heißt nicht unbedingt gebunden an bestehende Farbsysteme wie zum Beispiel RGB oder YMCK. Innerhalb eines Datenstroms oder auch Dokuments können dabei objektweise verschiedene Referenzierungen erfolgen, beispielsweise ein erstes Objekt gemäß einem ersten Farbsystem (zum Beispiel RGB) und ein zweites Objekt gemäß einem zweiten Farbsystem, das vom ersten unabhängig ist. Dabei wird insbesondere ermöglicht, ein ausgabegerätespezifisches Farbsystem indiziert, das heißt direkt mit nur wenigen Steuerungsdaten im Dokumentendatenstrom zu referenzieren. Das Farbsystem ist dabei insbesondere geräteindividuell definiert durch geräteindividuelle Farbtöne, wie zum Beispiel Highlight-Farben oder Custom Tone^{®} Farben, die keine Grundfarben eines herkömmlichen Farbsystems sind.

Zum Erzeugen einer indizierten Farbmanagementressource ist es insbesondere vorteilhaft, die in einem Ausgabegerät, wie zum Beispiel einem Drucker, verfügbaren Farbtöne und/oder Druckstoffe sowie deren Eigenschaften, wie zum Beispiel calorimetrische Farbwerte, verfügbar zu haben bzw. in einer Tabelle zu speichern. Diese können dann bei der Erstellung der indizierten Farbmanagementressource berücksichtigt und insbesondere auch in die Farbmanagementressource aufgenommen werden. Für eine weitgehend automatisierte Erstellung von indizierten Farbmanagementressourcen ist es vorteilhaft, wenn die Ausgabegeräte diese Werte automatisch an ein Steuerungssystem, das die Erzeugung der Farbmanagementressource steuert, meldet. Dies kann in einer Druckproduktionsumgebung, beispielsweise über ein Datennetzwerk sowie einen Druckserver, erfolgen.

Gemäß einem vorteilhaften Ausführungsbeispiel der Erfindung enthält eine indizierte Farbmanagementressource eine codierte Information, zum Beispiel in einem Kopfbereich (header section), die der Anzahl der in der indizierten Farbmanagementressource verfügbaren Prozeßfarbpaletten zugeordnet ist.

In einem weiteren, vorteilhaften Ausführungsbeispiel der Erfindung enthält die indizierte Farbmanagementressource prozessfarbpalettenweise eine codierte Information, die angibt, welche insbesondere im Ausgabesystem verfügbaren und/oder in einem Farbsystem, wie zum Beispiel RGB oder YMCK, definierten Farbtöne zur Wiedergabe der Prozessfarben der jeweiligen Prozessfarbpalette benötigt werden.

Das beschriebene Konzept für Farbmanagementressourcen schafft für Ersteller von Dokumenten ein flexibles, geräteunabhängiges System, weil es von dem Drucken in Grauskalen bis hin zu Vollfarbanwendungen mit einer Vielzahl verschiedener Grundfarben Möglichkeiten der Dokumentengestaltung eröffnet. Auch weitere Funktionalitäten von Hightlight-Color bzw. "spot color" in Postscript/PDF-object containern können in die vorgeschlagene Umgebung integriert werden.

Weitere Details der beiden zuletzt genannten Erfindungsaspekte sind in der eingangs genannten, von der Anmelderin am gleichen Tag hinterlegten Patentanmeldung mit dem Titel "Verfahren, Computerprogrammprodukt und Vorrichtung zur Erzeugung und Verarbeitung von Dokumentendaten mit indizierten Farbmanagementressourcen" enthalten, die zu diesem Zweck an dieser Stelle nochmals durch Bezugnahme in die vorliegende Beschreibung aufgenommen wird.

Gemäß einem weiteren, vorteilhaften Ausführungsbeispiel der Erfindung werden in einer Druckauftrags-Begleitdatei, die insbesondere gemäß dem JDF-Standard ausgebildet ist, Daten über die Farbmanagementressourcen integriert und die Druckauftrags-Begleitdatei zwischen zwei an der Verarbeitung der Druckdaten beteiligten Datenverarbeitungssystemen ausgetauscht. Die Daten über die Farbmanagementressourcen können dabei hinsichtlich ihres Umfangs je nach den Anforderungen, die zur Bearbeitung der Druckdaten gestellt werden und der Gegebenheiten, wie zum Beispiel der Verfügbarkeit der Farbmanagementressourcen in einem nachgeschalteten Datenverarbeitungssystem, sehr unterschiedlich sein. Sie können zum Beispiel von einer einfachen, 1 Bit umfassenden Information, die angibt, ob der Druckjob mit Farbmanagementressourcen verarbeitet werden soll, über die Referenzierung von Farbmanagementressourcen oder Typen von Farbmanagementressourcen bis hin zu den konkreten Daten der Farbmanagementressourcen als solche reichen.

Weitere Vorteile und Wirkungen der Erfindung werden aus der nachfolgenden Beschreibung von Ausführungsbeispielen und den zugehörigen Figuren deutlich.

Es zeigen:
- Figur 1:: ein Dokumentenproduktionssystem,
- Figur 2:: ein Beispiel für eine indizierte Farbmanagementressource,
- Figur 3:: einen Verfahrensablauf zur Zuordnung von Farben in einem Druckauftrag,
- Figur 4:: die Verarbeitung eines MO:DCA Datenstroms und
- Figur 5:: die Verarbeitung eines weiteren MO:DCA Datenstroms.

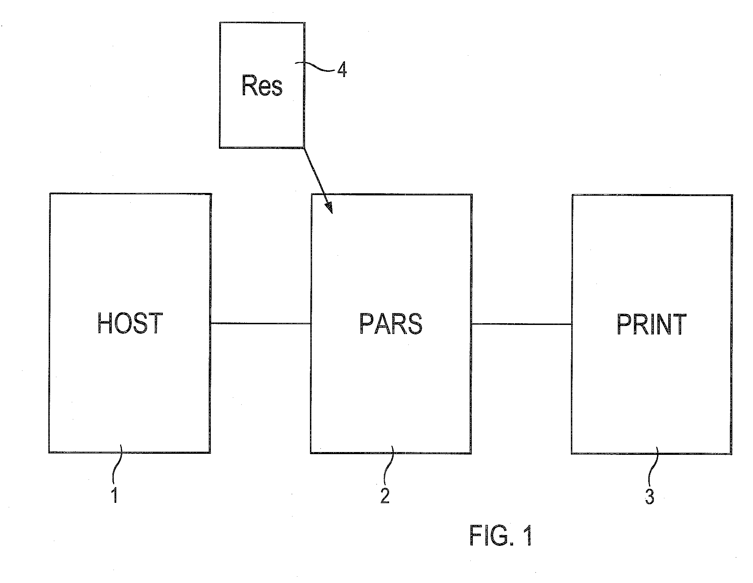

In Figur 1 ist ein Dokumentenerzeugungs-, und -drucksystem dargestellt, das einen Host-Computer 1, einen Druckserver 2 und ein Hochleistungsdruckgerät 3 umfasst. Im Host-Computer 1 werden einerseits variable Druckdaten beispielsweise aus einer Datenbank heraus erzeugt und andererseits ressourcenumfassend eine Pagedef-Datei und eine Formdef-Datei, aus denen ein Advanced Function Presentation Datenstrom gebildet wird. Der so erzeugte Dokumentendatenstrom wird dem Druckserver 2 zugeführt, in dem der Dokumentendatenstrom aufbereitet und in einen Intelligent Printer Datastream (IPDS) zur Ausgabe an das Druckgerät 3 umgewandelt wird. Im Druckserver 2 laufen dazu mehrere Prozesse ab, die durch Softwaremodule gesteuert sind. Ein erstes Softwaremodul bindet weitere Ressourcendaten 4 wie zum Beispiel Fonts oder Overlays, die im orginären Dokumentendatenstrom aufgerufen werden, in diesen ein. Ein zweites Softwaremodul, das Parsing-Modul, überprüft den Dokumentendatenstrom auf Konsistenz mit vorgegebenen Regeln. Dem Parsing-Vorgang vorgeschalten ist ein Pre-Parsing-Vorgang, der von einem entsprechenden Softwaremodul durchgeführt wird, bei dem jedem Ressourcenaufruf und der zugeordneten Ressourcendatei zusätzlich zum Ressourcennamen ein Identifizierungsdatum zugeordnet wird, durch das die Ressource gegenüber allen anderen Ressourcen des Dokumentendatenstroms eindeutig gekennzeichnet ist. Innerhalb des Dokumentendatenstroms kann die Ressource dann mittels des Ressourcennamens und/oder des Identifizierungsdatums einmal oder mehrfach zur Darstellung der Dokumentendaten und der Ressourcendaten auf dem Druckgerät 3 aufgerufen werden. Die hier im Druckserver dargestellten Prozesse können teilweise oder vollständig auch in einem Controller des Druckgeräts durchgeführt werden. Im Druckgerät wird der IPDS-Datenstrom gerastert und die Dokumente ausgedruckt.

Im gezeigten Ausführungsbeispiel enthält der AFP-Dokumentendatenstrom Dokumente, die dem MO:DCA-Standard entsprechen und der jeweils Referenzdaten zu Datenobjekten enthält, die durch den Druckserver 2 verfügbar sind. Die Ressourcendaten 4 können dabei vom Host-Computer 1 an den Druckserver 2 getrennt von dem MO:DCA-Dokumentendatenstrom übertragen werden oder bereits im Druckserver 2 als externe Ressourcen gespeichert sein. Die Ressourcendaten können aber auch zusammen mit dem Dokumentendatenstrom vom Host-Computer 1 an den Druckserver 2 als eingebettete Ressourcendaten übertragen werden (sogenannte Inline Ressourcen). Weitere Details einer entsprechenden Datenverarbeitung sind in der WO-A1-2004/0008379 beschrieben, die hierzu an dieser Stelle der Beschreiung durch Bezugnahme aufgenommen wird. Die Ressourcendaten können sogenannte Datenobjektressourcen enthalten, die Objektdaten beinhalten, welche insbesondere mehrfach in identischer Weise im Dokumentendatenstrom referenziert werden. Derartige Datenobjekte können zum Beispiel Bilddaten, Textdaten und/oder Grafikdaten enthalten. Die Bezugnahme auf die Objektressourcen kann über eine Objektressourcebibliothek erfolgen, die charakterisierende Daten zu dem Objekt enthält sowie Daten über dem Speicherort der entsprechenden Objektdaten. Die Library umfaßt eine Datenobjektressource-Zugangstabelle (Data Object Ressource Access Table RAT), die für den Druckserver 2 als Indextabelle für den Zugriff des Druckservers auf die Ressourcendaten wirkt.

Der Druckserver 2 empfängt den MO:DCA-Dokumentendatenstrom vom Host-Computer 1, konvertiert ihn in einen IPDS-Dokumentendatenstrom und sendet diesen an das Druckgerät 3. Im Zuge der Datenkonvertierung liest es aus dem MO:DCA-Dokumentendatenstrom die Referenzinformation (Name) eines Datenobjekts und greift mit Hilfe der Datenobjektressource-Zugriffstabelle (RAT) auf die gespeicherte Datenressource zu. Die vollständigen Daten des Objekts werden dann in den IPDS-Datenstrom integriert und an das Druckgerät 3 gesandt. Dieses Verfahren kann genauso gut angewandt werden, wenn die Daten statt an ein Druckgerät an ein anderes Ausgabegerät, zum Beispiel an einen Farbbildschirm, gesandt wird.

Ein MO:DCA-Dokumentendatenstrom ist in Datenelemente strukturiert, die weitgehend selbsterklärend sind. Strukturierte Felder (structured field) sind wichtige Bestandteile der MO:DCA-Struktur. Ein strukturiertes Feld ist in mehrere Teile gegliedert. Ein erster Teil (introducer) identifiziert das gewünschte Kommando, gibt die vollständige Länge des Kommandos an und spezifiziert zusätzliche Kontrollinformation, zum Beispiel ob zusätzliche auffüllende Bytes, sogenannte Padding-Bytes, vorhanden sind. Die in einem strukturierten Feld enthaltene Daten können als Fixparameter codiert sein, Wiederholungsinformationen beinhalten (repeating groups), Stichworte (keywords) und sogenannte Triplets. Die Fixparameter entfalten ihre Wirkung nur für die Struktur, in der sie enthalten sind. Wiederholungsgruppen spezifizieren eine Gruppierung von Parametern, die mehrmals auftreten können. Stichworte sind selbsterklärende Parameter, die typischerweise zwei Bytes umfassen, wobei das erste Byte ein Identifikationsbyte für das Stichwort ist und das zweite Byte ein für das Stichwort charakterisierender Datenwert. Triplets sind selbsterklärende Parameter, die in einem ersten Byte eine Längenangabe, in einem zweiten Byte eine für das Triplet charakterisierende Identifizierungsinformation und dann bis zu 252 Datenbytes enthalten. Die genannten Datenstrukturen eines MO:DCA-Dokumentendatenstroms definieren einen Syntax, der im Zuge eines Parsingvorgangs auswertbar ist und flexibel erweiterbar ist.

MO:DCA-Datenströme sind weiterhin hierarchisch gegliedert, wobei in der obersten Hierarchiestufe Informationen enthalten sind, die sich auf den gesamten Datenstrom beziehen (print file component). In der nächsten Hierarchiestufe sind Dokumente definiert, welche hierarchiestufenweise heruntergebrochen werden, auf mehrere Seiten umfassende Seitenbereiche (engl. page groups), Seiten und Seitenelemente, welche wiederum in Unterhierarchien zerfallen können. Die Seitenelemente sind dabei insbesondere Objekte, welche aus verschiedenen Objektkomponenten bestehen, welche die niedrigste Hierarchiestufe darstellen. Objektkomponente können zum Beispiel Grafiken, Bilder, Darstellungstext oder Barcodes sein.

Jede Hierarchiestufe des MO:DCA-Dokumentendatenstroms kann durch ein paar von strukturierten Feldern einem anfangsstrukturierten Feld und einem end-strukturierten Feld definiert werden. Dadurch ist es insbesondere möglich, dass ein Prozessor, der die Daten verarbeitet, ein Element ignorieren kann, das er nicht verarbeiten kann. Beispiele von solchen Beginn-End-Paaren sind die Paare "Begin Document" (BDT) und "End Document (EDT) oder "Begin Page" (BPG) und "End Page" (EPG).

Auch für Dokumentenobjekte, die über eine Ressource referenziert werden, sind entsprechende Paare strukturierter Felder vorgesehen, nämlich das strukturierte Feld "Begin Ressource" (BRS) und "End Ressource" (ERS). Innerhalb eines Ressourcenobjekts können weitere Ressourcenobjekte referenziert werden.

Zur Verarbeitung von farbbezogenen Informationen zu Dokumentenobjekten sind in der US 2005/0248787 A1 Farbmanagementressourcen (Color Management Ressources CMR) vorgeschlagen worden. Sinngemäß sind verschiedene Typen von Farbmanagementressourcen vorgesehen:

Eine Farbkonversions-Farbmanagementressource (Color Convertion CMR), die eine geräteabhängige Farbe definiert, beispielsweise eine Farbe, die von einem Eingabegerät, wie zum Beispiel einem Scanner oder von einer wiedergegebenen Farbe eines Ausgabegerätes, wie zum Beispiel eines Druckgerätes, definiert. Die Farbe wird dabei auf Basis eines geräteunabhängigen Farbraums, wie zum Beispiel dem Farbraum CIELAB dargestellt. Dadurch kann eine Farbmanagementressource zum Beispiel Daten eines ICC-Farbprofils enthalten.

Eine weitere Farbmanagementressource ist die verbundene Farbkonvertierungs-Farbmanagementressource (Link Color Convertion CMR). Mit ihr wird eine Farbtransformation für ein farbiges Objekt definierbar, das mit einem ersten Gerät erzeugt bzw. aufgenommen wurde, das eine gerätespezifische Farbcharakteristik hat und mit einem zweiten Gerät ausgegeben wird, das eine gegenüber dem ersten Gerät unterschiedliche geräteabhängige Farbcharakteristik hat. Mit einer Verbindungsfarbkonversion CMR kann dann zum Beispiel die Konversion der Daten eines Objekts, das im RGB-Farbraum definiert ist, direkt in Daten erfolgen, die auf einem Druckgerät ausgegeben werden, das auf Basis des CMYK-Farbraums arbeitet. Mit einer entsprechenden Umrechnungstabelle (Look-up-Tabelle) können dabei die RGB-Dokumentendaten direkt in den CMYK-Raum konvertiert werden. Die Look-up-Tabelle ermöglicht dabei weiterhin, Farbcharakteristiken, insbesondere die ICC-Profile der beiden Geräte zum Erzeugen der RGB-Bilddaten (zum Beispiel einer Kamera) und des Ausgabegerätes (zum Beispiel Druckgerätes) direkt mit einzubeziehen, so dass die Farbtransformation sowohl zwischen den beiden Farbräumen als auch unter Berücksichtigung der beiden gerätespezifischen Farbprofile in einem Verarbeitungsschritt unter Verwendung der Look-up-Tabelle erfolgen kann.

Ein weiterer CMR-Typ ist eine Halbtonabbildungsfarbmanagementressource (Half Tone Screen CMR). Mit einer solchen CMR wird definiert, wie digitalisierte Farbtonwerte einer Farbe in die digitalisierten Werte einer Farbe transformiert werden, die weniger Bits umfasst, beispielsweise kann damit eine Umrechnung von einer Farbe, die in acht Bits beschrieben wird in eine Farbe erfolgen, die mit weniger als acht Bits beschrieben wird. Damit kann die Erscheinungsweise eines farbigen Dokuments bei der Ausgabe modifiziert bzw. angepasst werden.

Sogenannte Kalibrierungkurvenfarbmanagementressourcen (calibration curve CMR) definieren Informationen, mit denen Steuerungsparameter für eine Ausgabefarbe modifizierbar sind, beispielsweise kann die Helligkeit und/oder die Sättigung der Ausgabekomponente damit verändert werden.

Einem Dokumentenobjekt können mehreren Farbmanagementressourcen zugeordnet werden, bzw. zu diesem Dokumentenobjekt mehrere Referenzierungen in Farbmanagementressourcen erfolgen, beispielsweise kann für ein Dokumentenobjekt zunächst eine Operation mit einer Kalibrierungskurvenfarbmanagementressource angewandt werden und danach eine Maßnahme gemäß einer Halbtonabbildungsfarbmanagementressource.

Farbmanagementressourcen können insbesondere in IPDS-Dokumentendatenströmen als Objektcontainerressourcen (Object container ressources) behandelt werden.

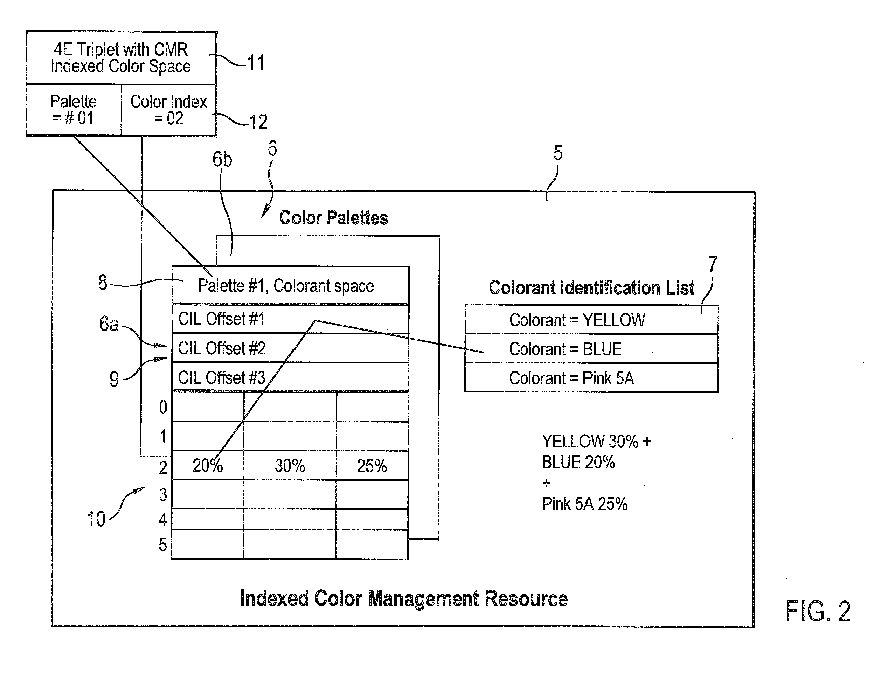

In Figur 2 ist ein Beispiel gezeigt, wie mit einem "4E"-Triplet eines MO:DCA-Datenstroms eine indizierte Farbe bzw. Farbmanagementressource angesteuert werden kann bzw. die dort gespeicherten Farbsteuerungsdaten aufgerufen werden können.

Eine indizierte Farbmanagementressource 5 enthält dazu Farbpalettendaten 6 und in einer Farbtonidentifizierungsliste 7 gespeicherte Daten zu individuellen Farbtönen bzw. Druckfarbstoffen, die zum Beispiel aus Toner oder Tinte bestehen können.

Die Farbpalettendaten sind in diesem Beispiel auf eine erste Farbpalette 6a und eine zweite Farbpalette 6b aufgeteilt, können jedoch statt dessen auch in einer entsprechend größeren einzigen Farbpalette integriert sein. Die Farbtonidentifizierungsliste 7 ist den Farbpaletten 6a bzw. 6b zugeordnet. Dazu enthalten die Daten der Identifizierungsliste Kenndaten für die individuellen Farbtöne, die entsprechenden Zuordnungsdaten in einem Farbtoninformationsbereich 9 der Farbpalette 6a zugeordnet sind. Zur Identifizierung der Farbpalette 6a ist eine Kopfinformation 8 vorgesehen. In einem Datenbereich 10 der Farbpalette 6a sind für die indizierten Farbwerte zu den drei Farbtönen bzw. ihren zugeordneten Farbdruckstoffen gelb (yellow), blau (blue) und pink 5a, die in der Farbtonidentifizierungsliste 7 aufgeführt sind, jeweils Werte hinterlegt, die entsprechenden Anteilen dieser drei Farbtöne zur Wiedergabe des indizierten Farbwerts entsprechen. Ein im MO:DCA-Datenstrom enthaltenes "4E"-Triplet, das die Index-Farbmanagementressource 5 referenziert, enthält Referenzierungsdaten 12, mit denen die in der Farbmanagementressource 5 hinterlegten Farbwerte abrufbar sind. Im gezeigten Beispiel besteht das Referenzierungsdatum aus einem ersten Byte, das der Palettennummer #01 entspricht und einem zweiten Byte #02, das die in der Palette indizierte Farbe referenziert. Die im gezeigten Beispiel referenzierte Indexfarbe Nummer 2 besteht aus einer Mischung der individuellen Farbtöne bzw. Farbdruckstoffe gelb zu 20 %, blau zu 30 % und pink 5a zu 25 %.

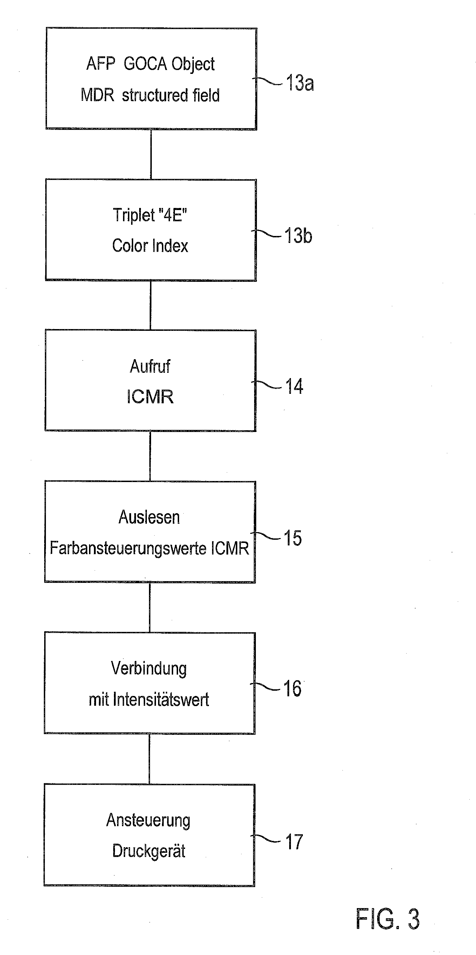

In Figur 3 ist ein Verfahren veranschaulicht, mit dem eine Farbzuordnung auf Basis indizierter Farbmanagementressourcen in einem GOCA Objekt 13a einer MO:DCA-Anwendung erfolgen kann. Das strukturierte Feld MDR enthält dabei im OEG dieses Object Containers eine Referenzinformation zur indizierten Farbmanagementressource 14. Weiterhin wird im "4E"-Triplet 13b ein Farbindex referenziert. Beim Interpretieren (parsing) des Datenstroms im Druckserver 2 wird auf Basis dieses Referenzierungswertes die entsprechende indizierte Farbmanagementressource im Schritt 14 aufgerufen und die entsprechenden Farbansteuerungswerte für die entsprechenden Farbtöne aus der indizierten Farbmanagementressource im Schritt 15 ausgelesen. Der genannte Schritt kann alternativ zum Druckserver auch im Druckgerät erfolgen. Vor dem Ausgeben des Datenstroms auf dem Druckgerät werden die aus der indizierten Farbmanagementressource gelesenen Werte zusätzlich mit Intensitätswerten überlagert, die den entsprechenden Bildpunkten zugewiesen sind (Schritt 16) und die entsprechenden Farbdruckstationen des Druckgeräts im Schritt 17 entsprechend angesteuert.

In AFP, MO:DCA und IPDS Datenströmen sind Strukturelemente vorgesehen, sogenannte Ausgabegeräteeinrichtungen (Screen Device Facilities, SDF), mit denen ausgabegerätsspezifische Einstellungen bzw. Festlegungen übertragen bzw. vorgenommen werden können. Für diese Datenströme können entsprechende Übertragungsfelder vorgesehen werden , mit denen Eigenschaften von Ausgabegeräten, insbesondere deren Fähigkeit Farbinformationen auszugeben, dargestellt werden können. Das entsprechende Datenstrukturfeld für ein derartiges SDF kann die Eigenschaften (Zahl der Bytes, Name, Gültigkeitsbereich der Werte (Range) und Datenbedeutung (meaning) aufweisen. Diese können Daten zu allgemeinen Eigenschaften des Ausgabegeräts (insbesondere Druckgeräts), z.B. für ein Gerät, das nur schwarz/weiß wiedergeben kann umfassen oder für ein Gerät, das mindestens eine Highlight-Color-Farbe wiedergeben kann, oder Informationen, die ein Ausgabegerät charakterisieren, das Vollfarbdaten wiedergeben kann.

Farbspezifikationsdaten können für ein Ausgabegerät (zum Beispiel ein Druckgerät) für das Gerät einmalig erfasst werden und verwendet werden, solange sich die entsprechende Charakteristik des Ausgabegeräts nicht verändert. Die Speicherung kann im Druckgerät selbst, in einem mobilen Datenträger, wie zum Beispiel einer CD-Rom, in einem Druckserver oder in einem Anwendercomputer einschließlich eines Host-Computers gespeichert werden, der Dokumentendaten erzeugt. Die entsprechenden Daten können selbstverständlich auch über Datennetzwerke, wie Intranet oder das Internet übertragen werden. Diese Daten können genauso wie die nachfolgend genannten Farbeigenschaften eines Druckgeräts näher charakterisierenden Daten verwendet werden, um Farbmanagementressourcen, insbesondere indizierte Farbmanagementressourcen, zu erzeugen. Die Farbmanagementressourcen können dabei insbesondere in Ressourcenbibliotheken gespeichert werden. Dies kann beispielsweise gemäß den in der US 2005/0248787 A1 genannten Verfahren erfolgen und zum Beispiel mit den darin in Figur 3 gezeigten Komponenten eines Farbmanagementressourcen-Installierungssystems (CMR Installer, Bezugszeichennummer 301), einer Color Engine (CEE, Bezugszeichennummer 303) unter Verwendung einer Ressourcenzugangstabelle (Ressource Access Table RAT, Bezugszeichennummer 304).

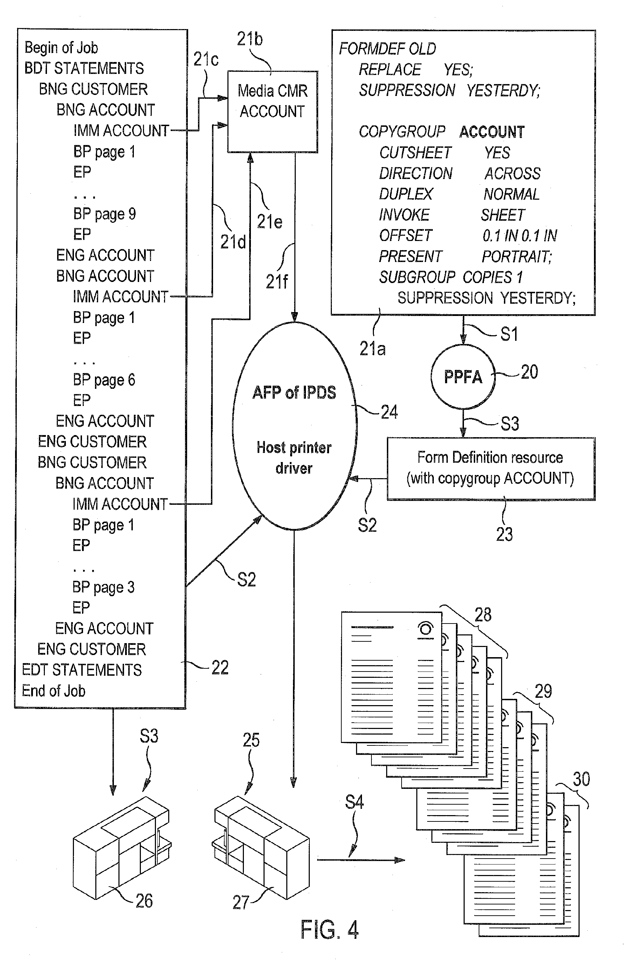

In Figur 4 ist die Verarbeitung eines MO:DCA AFP-Druckdokumentendatenstroms dargestellt. Die verschiedenen Verarbeitungsschritte zeigen, was ein AFP-Anwendungsdesigner (Anwender) zu tun hat, um eine Anwendung zu erstellen: mittels eines Formatierungs-Computerprogramms 20, das zum Beispiel das eingangs erwähnte Page Printer Formatting Aid (PPFA) Tool der Firma IBM oder der im oben eingeführten Druckerbuch beschriebenen Smart Layout Editor (SLE) sein kann, und einer Kontrolldatei 21a mit korrespondierenden Formatierungsparametern erzeugt der Anwender eine Formdef-Datei (Ressource) 23, die eine Copygroup (Media Map) mit dem Namen ACCOUNT enthält (Schritte S1, S3).

Eine Druckdatendatei 22, die variable Daten enthält, wird vom Anwender so aufbereitet, dass die Copygroup, welche mit der Kontrolldatei 21a angelegt wurde, mit strukturierten Feldern des Typs Invoce Media Map (IMM) "IMM Account", die zwischen den variablen Daten stehen, aufgerufen wird. Einzelheiten zu den strukturierten Feldtyp IMM können dem eingangs genannten IBM-Dokument SC31-6802-05 entnommen werden.

In dem in Figur 4 dargestellten Beispiel enthält die Druckdatendatei Kontoauszugs-Dokumente für zwei verschiedene Kunden einer Bank. Die Dokumentendaten enthalten einerseits statische Formulardaten und weiterhin die seitenindividuellen kundenspezifischen Daten. Für den ersten Kunden enthält die Druckdatendatei 22 zwei Kontoauszüge 28, 29 mit 9 Seiten, ausgedruckt auf 4 Blättern, bzw. 6 Seiten, ausgedruckt auf 3 Blättern. Für den zweiten Kunden soll ein Kontoauszugs-Dokument 30 mit 2 Seiten ausgedruckt werden. Dazu wird die Druckdatendatei 22 und die Formdef-Datei 23 einem Druckertreiber 24 eines Hostcomputers oder Druckservers zugeführt, der im Schritt S3 aus den beiden Dateien und ggf. zusätzlicher Ressourcen-Dateien, wie zum Beispiel Fonts, einen Druckdatenstrom des Formats IPDS bildet, mit dem ein IPDS-fähiges Drucksystem 25 angesteuert wird. Das Drucksystem 25 besteht im gezeigten Beispiel aus einem ersten elektrofotografischen Digitaldrucker 26, in dem die Vorderseite eines bahnförmigen Aufzeichnungsträgers bedruckt wird und einem elektrofotografischen Digitaldrucker 27, in dem die Rückseite desselben Aufzeichnungsträgers mit den jeweils zugehörigen Daten bedruckt wird. Beide Drucker enthalten entsprechende Controller zum Interpretieren der eingehenden Datenströme und elektronische Ansteuerungselemente, wie zum Beispiel einen LED-Kamm mit zugehöriger Elektronik.

Im Schritt S4 werden die zuvor genannten Dokumente ausgedruckt, das heißt als erstes Dokument 28 der erste Ausdruck des ersten Kunden, der fünf Einzelblätter umfasst, als zweites Dokument 29 drei Blätter für den ersten Kunden mit dem zweiten Kontoauszug und als drittes Dokument 30 zwei Blätter für den zweiten Kunden.

Bei jedem Aufruf der Media Map (engl. Invoke Media Map, IMM) "IMM ACCOUNT" wird im Zuge der Ausgabe der Daten im Drucksystem das entsprechende Ausgabemedium verwendet bzw. gegenüber einem zuvor verwendeten Ausgabemedium gewechselt (zum Beispiel auf gelbes DIN A4 Papier mit 60g/m²). Zusätzlich wird dem Datenstrom automatisch oder durch ein entsprechendes Structured Field eine Farbmanagementressource, die den Namen "Media CMR ACCOUNT" trägt, zugeordnet (Pfeile 21c, 21d, 21e), welche bei der Erzeugung des IPDS Datenstroms im Druckertreiber 24 in einen Object Container eingebunden wird (Pfeil 21f).

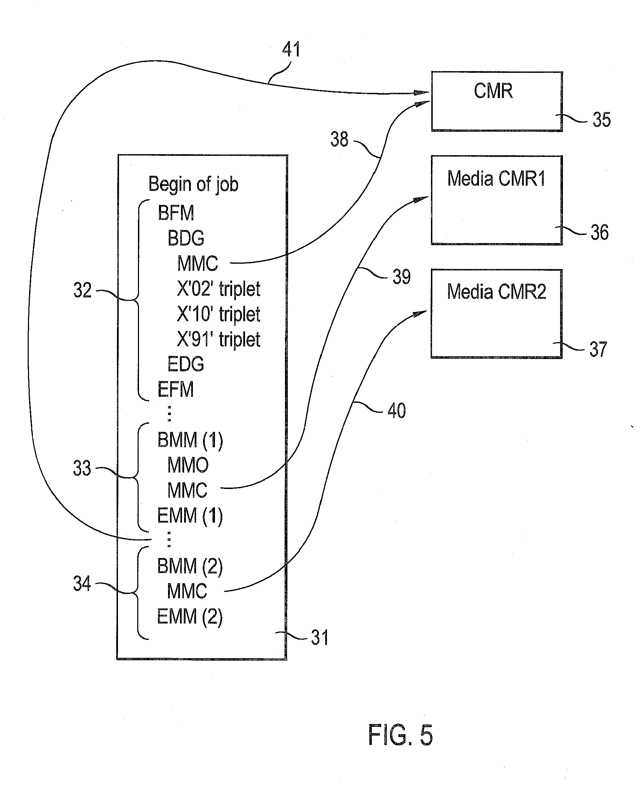

In Figur 5 ist ein MO:DCA-Dokumentendatenstrom 31 dargestellt, in dem in einem Formdef-Bereich 32, der durch die Map-Objekte BFM (Begin Form Map) und EFM (End Form Map) begrenzt wird und in dem durch ein Medium Modification Control Feld (MMC) eine für den gesamten Dokumentendatenstrom 31 bzw. Druckjob gültige Farbmanagementressource 35 referenziert wird (Pfeil 38), das heißt in der obersten Hierarchiestufe des Datenstroms gilt. In weiteren Bereichen 33, 34 des Datenstroms 31, die jeweils einer niedrigeren Hierarchiestufe, nämlich einer Gruppe von Seiten, zugeordnet ist, werden diesen Seiten Aufzeichnungsträger anhand von Media Map Objekten zugeordnet. Die Bereiche 33, 34 sind im Datenstrom 31 jeweils durch die Map Objekte BMM (Begin Media Map) und EMM (End Media Map) begrenzt. Dem Bereich 33, der beispielsweise im Druckgerät vorgesehenen Trennblättern zugeordnet sein kann, ist dabei einer den Farbattributen der Trennblätter (zum Beispiel deren Farbe hellblau) und deren übrigen Attributen (Gewicht, zum Beispiel 60g/m², Material, zum Beispiel Papier usw.) entsprechenden Farbmanagementressource 36 zugeordnet (Pfeil 39). Dem Bereich 34, der beispielsweise im Druckgerät vorgesehenen, folienbeschichteten, zu bedruckenden Blättern zugeordnet sein kann, ist dabei einer dem Oberflächenattribut (Folienschicht) der Blätter entsprechenden Farbmanagementressource 37 zugeordnet (Pfeil 40). Dokumentenseiten, die im Datenstrom 31 zwischen den Aufrufen der Bereiche 33, 34 liegen, das heißt insbesondere nach dem Beenden des Bereichs 33, werden bei ihrer Verarbeitung automatisch der Farbmanagementressource des übergeordneten Bereichs, im gezeigten Beispiel dem Bereich des gesamten Druckjobs und damit der Farbmanagementressource 35 zugeordnet (Pfeil 41) und im Druckgerät mit den Daten dieser Farbmanagementressource verarbeitet.

Der Datenstrom 31 kann weitere Ressourcen und/oder Ressourcenaufrufe gemäß der MO:DCA-Spezifikation aufweisen. Die Daten des Datenstroms können insbesondere den in der eingangs genannten US-A1-2005/0248787 entsprechende Daten umfassen und mit den in dieser Veröffentlichung gezeigten Verfahren erzeugt und/oder verarbeitet werden. Diese Veröffentlichung wird zu diesem Zweck an dieser Stelle der Beschreibung nochmals in Bezug genommen.

Die für die bestehenden Datenstromspezifikationen zu AFP, MO:DCA und IPDS insbesondere in den Ausführungsbeispielen angegebenen, konkreten Erweiterungsvorschläge wie zum Beispiel die weiter oben angegebene Referenzierung einer Farbmanagementressource über ein Medium Modification Control (MMC) Feld sind nur als unverbindliche Beispiele zu verstehen und die Grundkonzepte der Erfindung sind in diesen Datenströmen selbstverständlich auch durch andere, konkrete Erweiterungsfestlegungen erreichbar.

Medienattribute wie Helligkeit, Gewicht, Farbe und Oberfläche können je nach Anforderungen gemäß verschiedenen Standards festgelegt werden, zum Beispiel gemäß einem Standard der Printer Working Group (PWG), insbesondere dem Internet Printing Protocol (IPP) oder auch dem Universal Printer, Pre- and Postprocessing (UP³I).

Die Erfindung ist insbesondere dazu geeignet, als Computerprogramm (Software) realisiert zu werden. Sie kann damit als Computerprogramm-Modul als Datei auf einem Datenträger wie einer Diskette, DVD- oder CD-ROM oder als Datei über ein Daten- bzw. Kommunikationsnetz verbreitet werden. Derartige und vergleichbare Computerprogramm-Produkte oder Computerprogramm-Elemente sind Ausgestaltungen der Erfindung. Der erfindungsgemäße Ablauf kann in einem Computer, in einem Druckgerät oder in einem Drucksystem mit vorgeschalteten oder nachgeschalteten Datenverarbeitungsgeräten Anwendung finden. Dabei ist klar, dass entsprechende Computer, auf denen die Erfindung angewandt wird, weitere, an sich bekannte technische Einrichtungen wie Eingabemittel (Tastatur, Mouse, Touchscreen), einen Mikroprozessor, einen Daten- bzw. Steuerungsbus, eine Anzeigeeinrichtung (Monitor, Display) sowie einen Arbeitsspeicher, einen Festplattenspeicher und eine Netzwerkkarte enthalten können.

### Bezugszeichenliste

- 1: Host-Computer
- 2: Druckserver
- 3: Druckgerät
- 4: Ressourcen-Daten
- 5: Indizierte Farbmanagementressource
- 6: Farbpaletten-Daten
- 6a, 6b: Farbpaletten
- 7: Farbtonidentifizierungsliste
- 8: Kopfinformation
- 9: Farbtoninformation
- 10: Indexdaten
- 11: '4E'-Triplet
- 12: Referenzierungsdaten
- 13: '4E'-Triplet-Aufruf
- 14: Aufruf ICMR
- 15: Auslesen ICMR
- 16: Ansteuerung Druckgerät
- 17: Farbansteuerung
- 20a: Formdef-Tool
- 21a: Kontrolldatei
- 21b: Media Map CMR
- 21c,d,e: CMR-Zuordnung
- 21f: CMR-Einbindung
- 22: Druckdatendatei
- 23: Formdef-Datei
- 24: Druckertreiber
- 25: Drucksystem
- 26: erstes Druckgerät
- 27: zweites Druckgerät
- 28: erstes Dokument
- 29: zweites Dokument
- 30: drittes Dokument
- 31: Datenstrom
- 32: Formdef-Bereich
- 33, 34: Media Map Bereiche
- 35: Color Management Ressource
- 36: Erste Media Color Management Ressource
- 37: Zweite Media Color Management Ressource
- 38...41: Referenzierungspfeile
- S1...54: Verarbeitungsschritte

## Patentansprüche

1. Verfahren zum Erzeugen und/oder Verarbeiten eines ressourcenbasierten Dokumentendatenstroms, mit dem die Ausgabe mindestens eines Dokuments auf einem Ausgabemedium, insbesondere einem Aufzeichnungsträger steuerbar ist, wobei der Dokumentendatenstrom auf mindestens eine Farbmanagementressource bezogene Ressourcenbezugsdaten und auf das Ausgabemedium bezogene Mediumbezugsdaten enthält, wobei die Ressourcenbezugsdaten und die Mediumbezugsdaten logisch derart miteinander verbunden sind, dass bei einem Wechsel einer Bezugnahme auf ein Ausgabemedium innerhalb des Dokumentendatenstroms automatisch ein Wechsel der Bezugnahme auf eine Farbmanagementressource erfolgt und wobei die Zuordnung von auf Farbmanagementressourcen bezogenen, seitenbezogenen und/oder medienbezogenen Attributen innerhalb des Dokumentendatenstroms hierarchisch nach Dokumentenbereichen erfolgt und eine auf eine Farbmanagementressource bezogene Einstellung auf den Wert einer übergeordneten Hierarchiestufe erfolgt, wenn eine Hierarchiestufe beendet wird.

2. Verfahren nach Anspruch 1, wobei aufeinanderfolgende Dokumentenseiten so lange mit denselben, zugeordneten Medienattributen verarbeitetet werden bis neue Medienattribute zugewiesen werden.

3. Verfahren nach Anspruch 1 oder 2, wobei, wenn einem Bereich des Dokumentendatenstroms mindestens ein Medienattribut zugeordnet wird, aber kein Farbattribut, diesem Bereich die für einen übergeordneten Bereich gültigen Farbattribute zugeordnet werden.

4. Verfahren nach einem der vorhergehenden Ansprüche, wobei dem Aufzeichnungsträger eine Farbmanagementressource zugeordnet wird und die Zuordnung durch Referenzierung der Farbmanagementressource innerhalb eines dem Aufzeichnungsträger zugeordneten Datenelements erfolgt.

5. Verfahren nach einem der vorhergehenden Ansprüche, wobei als Hierarchiestufen des Dokumentendatenstroms die Stufen "Gesamtdatenstrom" und insbesondere "Druckdatei", "Dokument", "Seitengruppe" und/oder "Datenobjekt" vorgesehen sind.

6. Verfahren nach einem der vorhergehenden Ansprüche, wobei der Dokumentendatenstrom gemäß der Spezifikation AFP, MO:DCA und/oder IPDS strukturiert ist.

7. Verfahren nach Anspruch 6, wobei die Zuordnung der Farbmanagementressource mit einem einer Medium Map zugeordneten Strukturelement, insbesondere mit einem Media Map Objekt, erfolgt.

8. Verfahren nach Anspruch 7, wobei die Bereiche (33, 34) im Dokumentendatenstrom jeweils durch die Map Objekte "Begin Media Map" (BMM) und "End Media Map" (EMM) begrenzt werden.

9. Verfahren nach einem der Ansprüche 6 bis 8, wobei in einem Formdef-Bereich (32) des Dokumentendatenstroms, der durch die Map-Objekte "Begin Form Map" (BFM) und "End Form Map" (EFM) begrenzt wird, durch ein "Medium Modification Control" Feld (MMC) eine für den gesamten Dokumentendatenstrom 31 gültige Farbmanagementressource (35) referenziert wird, die in der obersten Hierarchiestufe des Datenstroms gilt.

10. Verfahren nach einem der vorhergehenden Ansprüche, wobei in einer Farbmanagementressource Werte zu Medieneigenschaften kodiert gespeichert sind, insbesondere zur Medienhelligkeit, zur Medienfarbe, zur Medienoberfläche und/oder zum Mediengewicht eines Aufzeichnungsträgermediums.

11. Verfahren nach einem der vorhergehenden Ansprüche, wobei in einem Ausgabegerät bei der Ausgabe der Dokumente geprüft wird, ob ein in ihm verfügbares, den Medienbezugsdaten entsprechendes Ausgabemedium den in der Farbmanagementressource abgespeicherten Medieneigenschaften entspricht und im Falle fehlender Übereinstimmung insbesondere hierarchiestufenweise geprüft wird, ob eine den Medieneigenschaften des Ausgabemediums besser entsprechende Farbmanagementressource verfügbar ist und diese gegebenenfalls zur Verarbeitung der zugeordneten Dokumentendaten verwendet wird.

12. Verfahren nach einem der vorhergehenden Ansprüche, wobei Dateien von Farbmanagementressourcen mit Namen versehen werden, aus denen mindestens ein Attribut der ihnen zugeordneten Medien hervorgehen.

13. Vorrichtung, umfassend einen Computer (1, 2, 25) und ein auf dem Computer (1, 2, 25) geladenes und ablaufendes Computerprogramm, das einen Verfahrensablauf zum Erzeugen und/oder Verarbeiten eines ressourcenbasierten Dokumentendatenstroms bewirkt, mit dem die Ausgabe mindestens eines Dokuments auf einem Ausgabemedium, insbesondere einem Aufzeichnungsträger steuerbar ist, wobei der Dokumentendatenstrom auf mindestens eine Farbmanagementressource bezogene Ressourcenbezugsdaten und auf das Ausgabemedium bezogene Mediumbezugsdaten enthält und wobei die Ressourcenbezugsdaten und die Mediumbezugsdaten logisch miteinander verbunden werden und wobei die Zuordnung von auf Farbmanagementressourcen bezogenen, seitenbezogenen und/oder medienbezogenen Attributen innerhalb des Dokumentendatenstroms hierarchisch nach Dokumentenbereichen erfolgt und eine auf eine Farbmanagementressource bezogene Einstellung auf den Wert einer übergeordneten Hierarchiestufe erfolgt, wenn eine Hierarchiestufe beendet wird.

14. Vorrichtung nach Anspruch 13, umfassend ein Druckgerät (3).

15. Computerprogrammprodukt, das beim Laden und Ausführen auf einem Computer einen Verfahrensablauf nach einem der Ansprüche 1 bis 12 bewirkt.
